# EUROPEAN PATENT SPECIFICATION

(11) **EP 1 867 533 B1**
(45) Date of publication and mention of the grant of the patent: **15.08.2012**
(21) Application number: 07010617.4
(22) Date of filing: 29.05.2007
(51) Int. Cl.: B60R 22/34

(54) **Seatbelt retractor and seatbelt apparatus using the same**
Sitzgurtretraktor und Sitzgurtvorrichtung damit
Rétracteur de ceinture de sécurité et appareil de ceinture de sécurité l'utilisant

(30) Priority: 15.06.2006 JP 2006165619
(43) Date of publication of application: 19.12.2007
(73) Proprietor: TAKATA CORPORATION, Minato-ku, Tokyo 106-8510 (JP)
(72) Inventor: Hiramatsu, Koji, Tokyo 106-8510 (JP)
(74) Representative: Banzer, Hans-Jörg

(56) References cited:
- EP-A- 1 180 457
- EP-A- 1 550 589
- WO-A-03/089280
- US-A1- 2002 050 542
- US-A1- 2005 139 712

## Description

### Technical Field of the Invention

The present invention relates to a seatbelt retractor which retracts the seatbelt so as to be withdrawn and retracted. More specifically, the present invention relates to a seatbelt retractor and a seatbelt apparatus which employs the seatbelt retractor. The seatbelt retractor is provided with an energy absorbing mechanism (hereinafter referred to as EA mechanism) for absorbing and alleviating the energy exerted to the occupant who is restrained by the seatbelt in the emergency state when the vehicle largely decelerates, for example, collision of the vehicle by limiting the load applied to the seatbelt through the action of the energy absorbing member such as torsional deformation of the torsion bar for preventing the withdrawal of the seatbelt.

### Description of the Related Art

Hitherto, the conventional seatbelt apparatus installed in the vehicle such as an automobile restrains the occupant with the seatbelt in the emergency state as described above for protecting the occupant so as not to be thrown from the seat.

In the aforementioned seatbelt apparatus provided with the seatbelt retractor which retracts the seatbelt, the seatbelt is retracted by the spool when not worn. Meanwhile, the seatbelt is withdrawn to restrain the occupant when worn. In the emergency state as described above, the lock member of the seatbelt retractor acts to block the rotation of the spool in the belt withdrawal direction to prevent withdrawal of the seatbelt. This makes it possible to restrain the occupant with the seatbelt to be protected in case of emergency.

With the seatbelt retractor of the conventional seatbelt apparatus, when the occupant is retrained by the seatbelt in the emergency state such as the vehicle collision, the vehicle largely decelerates, and the resultant large inertia of the occupant is likely to force the occupant to move forward. Relatively large load is applied to the seatbelt and accordingly, the occupant receives large energy from the seatbelt. The application of the aforementioned energy to the occupant may be regarded as the minor problem. However, it is preferable to limit the aforementioned energy.

Generally, the seatbelt retractor is provided with a torsion bar so as to absorb and alleviate the energy by limiting the load applied to the seatbelt in the emergency state while the seatbelt is worn by the occupant (see Japanese Unexamined Patent Application Publication No.2001-58559).

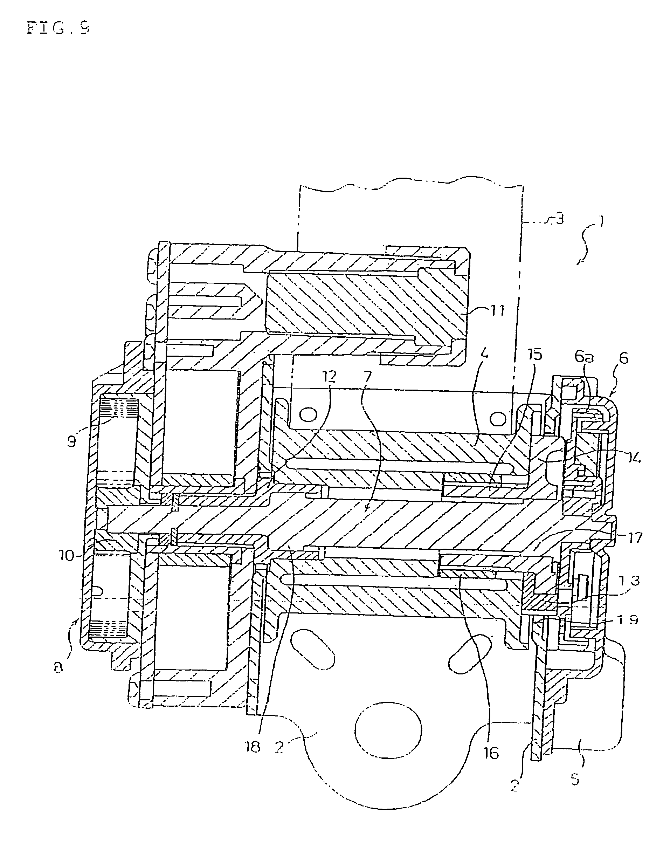

Fig. 9 is a longitudinal sectional view showing an example of the seatbelt retractor disclosed in Japanese Unexamined Patent Application Publication No.2001-58559. In the drawing, a reference numeral 1 denotes a seatbelt retractor, 2 denotes a U-shaped frame, 3 denotes a seatbelt, and 4 denotes a spool that is rotatably supported between both side walls of the U-shaped frame 2 to retract the seatbelt 3, 5 denotes a deceleration detection unit which is activated to detect the large deceleration of the vehicle in the emergency state, 6 denotes a lock unit which is driven by the deceleration detection unit 5 to block the rotation of the spool at least in the belt withdrawal direction, 7 denotes a torsion bar which is loosely fit to pierce into the center of the spool 4 such that the spool 4 and the lock unit 6 are rotatably linked, 8 denotes a spring member which constantly urges the spool 4 in the belt retracting direction via a bush 10 using the spring force of a spiral spring 9, 11 denotes a pretensioner which is activated in the emergency state as described above to generate the belt retracting torque, and 12 denotes a bush which transmits the seatbelt retracting torque of the pretensioner 11 to the spool 4.

The lock unit 6 includes a locking base (corresponding to a locking member of the present invention) 14 which is rotatable together with a first torque transmission shaft 17 of the torsion bar 7 and slidably holds a pawl 13, and a lock gear 6a which is normally rotatable together with the torsion bar 7 and stopped by the operation of the deceleration detection unit 5 to generate the relative rotation difference with respect to the torsion bar 7 such that a pawl 13 is engaged with inner teeth 19 on the side wall of the frame 2 to block the rotation of the locking base 14 in the seatbelt withdrawal direction. The locking base 14 has an external thread shaft 15 with which a nut-like stopper member 16 which rotates together with the spool 4 is screwed.

The torsion bar 7 includes a first torque transmission portion 17 and a second torque transmission portion 18 which are engaged with the locking base 14 and the spool 4, respectively so as to disable the relative rotation.

The spool 4 is constantly urged in the seatbelt retracting direction under the spring force of the spring member 8 via the bush 10, the torsion bar 7, the second torque transmission portion 18 of the torsion bar 7 and the bush 12. During operation of the pretensioner 11, the belt retracting torque generated thereby is transmitted to the spool 4 via the bush 12 so as to retract the seatbelt 3 by a predetermined amount.

In the thus structured conventional seatbelt retractor 1, when the seatbelt is not worn by the occupant, the seatbelt 3 is fully retracted under the urging force of the spring member 8. When the seatbelt 3 is withdrawn at the normal speed for the occupant to wear it, the spool 4 rotates in the seatbelt withdrawal direction such that the seatbelt 3 is smoothly withdrawn. When the tongue (not shown) slidably attached to the seatbelt 3 is inserted to be fit with the buckle (not shown) fixed to the vehicle body, the seatbelt 3 which has been excessively withdrawn is retracted by the spool 4 under the urging force of the spring member 8 such that the occupant is restrained by the seatbelt 3 so as not to make the occupant feel too tight.

In the emergency state as described above, the seatbelt retracting torque generated by the pretensioner 11 is transmitted to the spool 4 for retracting the seatbelt 3 by a predetermined amount so as to securely restrain the occupant. Meanwhile, the large deceleration of the vehicle which occurs in the emergency state activates the deceleration detection unit 5 to operate the lock unit 6. That is, the operation of the deceleration detection unit 5 blocks the rotation of the lock gear 6a in the seatbelt withdrawal direction, and the pawl 13 of the lock unit 6 rotates to be engaged with the inner teeth 19 on the side wall of the frame 2. As the rotation of the locking base 14 in the seatbelt withdrawal direction is blocked, the torsion bar 7 is twisted, and only the spool 4 rotates relative to the locking base 14 in the seatbelt withdrawal direction. Subsequently, the spool 4 rotates in the seatbelt withdrawal direction while twisting the torsion bar 7. The resultant torsional torque of the torsion bar 7 limits the load applied to the seatbelt 3 such that the impact exerted to the occupant may be absorbed and alleviated. The load limiting function of the torsion bar 7 is always performed in the emergency state.

As the spool 4 rotates relative to the locking base 14, the stopper member 16 rotatable together with the spool 4 rotates relative to the external thread shaft portion 15 screwed therewith, and moves toward the locking base 14. When the stopper member 16 abuts against the locking base 14, further rotation of the stopper member 16 is blocked. The rotation of the spool 4 is accordingly blocked such that twisting of the torsion bar 7 is stopped. In this aforementioned way, withdrawal of the seatbelt 3 is prevented to restrain the occupant. Further, the maximum twisting of the torsion bar 7 is limited to protect the torsion bar 7 from being cut through the twisting.

The conventional seatbelt retractor 1 allows the locking base 14 of the lock unit 6 to rotate relative to the lock gear 6a in the belt withdrawal direction in spite of rapid withdrawal of the seatbelt. The pawl 13 of the lock unit 6 is engaged with the inner teeth 19 on the side wall of the frame 2 to block the rotation of the locking base 14. This makes it possible to block the rotation of the spool 4 in the belt withdrawal direction via the torsion bar 7 so as to prevent the seatbelt from being withdrawn.

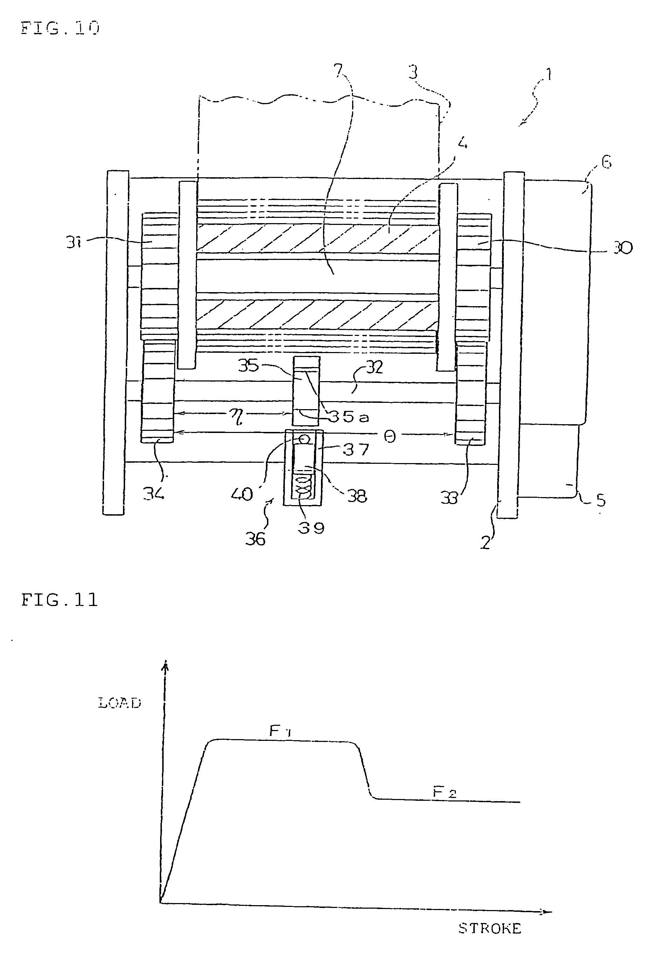

Japanese Unexamined Patent Application Publication No.2001-58559 discloses the seatbelt retractor 1 capable of selecting the limited load. Referring to Fig. 10, the lock member 38 is normally prevented from jumping out of the cylinder member 37 with the lock pin 40 of the EA load selection mechanism 36. When the rotation of the locking base in the belt withdrawal direction is blocked upon serious collision which activates the pretensioner, the rotation of the gear 30 attached to the locking base in the same direction is also blocked. Accordingly, the rotation of the gear 33 normally in mesh with the gear 30 is also blocked. As the seatbelt 3 is likely to be withdrawn by the inertia of the occupant, the spool 4 further rotates in the belt withdrawal direction. Accordingly, the gear 31 attached to the spool 4 so as to be integrally rotatable therewith also rotates in the same direction, and the gear 34 normally in mesh with the gear 31 also rotates.

Meanwhile, in the initial stage after the serious collision, the lock pin 40 is forced out by the exhaust gas from the pretensioner such that the lock member 38 is jumped out from the cylinder member 37 under the spring force of the spring 39. Then a ratchet pawl 35a of the lock wheel 35 is engaged with the lock member 38 such that the rotation of the lock wheel 35 in the belt withdrawal direction is blocked. The second torsion bar 32 is twisted at the position of the length η shorter than the whole length θ. The twisting of the first torsion bar 7 and the second torsion bar 32 at the position of the length η allows the EA mechanism to start the EA operation. The resultant FL load F₁ is relatively large as shown in Fig. 11. In the subsequent stage from the initial stage, the position at the length η of the second torsion bar 32 is twisted by a predetermined amount to be ruptured. Thereafter, the first torsion bar 7 is only twisted to allow the EA operation. The resultant FL load F₂ is relatively smaller than that of the initial stage as shown in Fig. 11. In this way, the FL load may be selected to flexibly set the limited load applied to the seatbelt in accordance with the restraint state of the occupant in the emergency state together with the airbag, for example.

The conventional EA mechanism includes the one for rubbing the wire at the locking base with the engagement pin at the spool (see Japanese Unexamined Patent Application Publication No.2002-53007), the one for forcibly deforming the strip-like plate having one end provided at the spool with the guide groove at the locking base (see Japanese Unexamined Patent Application Publication No.2000-85527), the one for plastically deforming the cylindrical member attached to the spool with the fixing portion at the locking base (see Japanese Unexamined Patent Application Publication No.2002-53008), the one for deforming the U-shaped flat plate material having one end provided at the locking base and the other end engaged with the spool (see Japanese Unexamined Patent Application Publication No. 10-258702), the one for performing shear rupture of the shear pin provided between the spool and the locking base when the rotation of the locking base is locked in the emergency state (see Japanese Unexamined Patent Application Publication No.2001-106025), the one for cutting the portion intended to be cut at the spool with the cutting blade at the locking base (see Japanese Unexamined Patent Application Publication No.2001-106025), and the one using the load resulting from pulling out of the thin and long energy absorbing pin between the spool and the locking base, which is fit in the axial hole of the spool (see Japanese Unexamined Patent Application Publication No.2002-59809).

The seatbelt retractor 1 disclosed in Japanese Unexamined Patent Application Publication No.2001-58559 is capable of variably setting the limited load depending on the restraint state of the occupant. However, only one limited load is set in the initial stage after the collision. In the initial stage after the collision, the energy exerted to the occupant is large. The energy varies depending on the body size of the occupant, the seat slide position, the collision speed, the collision acceleration/deceleration, the collision type and the like. The use of a plurality of the limited load allows the occupant to be effectively and appropriately restrained instead of the use of only one limited load depending on the different large energy in the initial stage.

The seatbelt retractor capable of variably setting the limited load applied to the seatbelt with further flexibility in accordance with the emergency state has been disclosed (see Japanese Unexamined Patent Application Publication No.2006-62632).

The seatbelt retractor as disclosed in Japanese Unexamined Patent Application Publication No.2006-62632 includes a single rotating shaft above the spool in parallel therewith. Two different EA mechanisms each having different EA characteristic are attached to the rotating shaft. At least one of those EA mechanisms may be operated in accordance with the emergency state. The selective operation of those two EA mechanisms allows the limited load applied to the seatbelt to be variably set in accordance with the emergency state.

Furthermore, a seat belt retractor according to the preamble of independent claim 1 is known from WO 03/089280 A1. In addition, EP 1 180 457 A1 discloses a seatbelt load limiting mechanism which is provided between a spool and a locking member of a seatbelt retractor.

### Disclosure of the Invention

### Problems to be Solved by the Invention

The seatbelt retractor as disclosed in Japanese Unexamined Patent Application Publication No.2006-62632 further includes one rotating shaft remote from the rotating shaft of the spool thereabove. The size of the seatbelt retractor is relatively large in the vertical direction. Recently, the seatbelt retractor installed in the vehicle interior has been demanded to be as compact as possible for the purpose of effectively using the vehicle interior space.

Even if the seatbelt retractor may be formed as compact as possible, the limited load applied to the seatbelt is required to be variably set with flexibility depending on the emergency state.

Accordingly, the object of the present invention is to provide a seatbelt retractor capable of variably setting the limited load applied to the seatbelt with further flexibility depending on the emergency state while being formed to be further compact, and to provide a seatbelt apparatus which employs the aforementioned seatbelt retractor.

### Means for Solving the Problems

According to the invention, this object is achieved by a seatbelt retractor as defined in claim 1 and a seatbelt apparatus as defined in claim 5. The dependent claims define preferred and advantageous embodiments of the invention.

The seatbelt retractor of the invention is provided with a spool which retracts a seatbelt and a lock unit provided with a locking member that rotates together with the spool upon transmission of a rotation of the spool via a first seatbelt load limiting mechanism in a normal state and the rotation in a seatbelt withdrawal direction is blocked in an emergency state. The first seatbelt load limiting mechanism limits a load applied to the seatbelt when the rotation of the locking member in the seatbelt withdrawal direction is blocked to allow the spool to rotate relative to the locking member in the seatbelt withdrawal direction. The seatbelt retractor further includes a second seatbelt load limiting mechanism coaxially provided with the spool which changes a limited load applied to the seatbelt in the emergency state based on information of the emergency state including an occupant's body size, a seat slide position, a collision speed, the collision at acceleration/deceleration, and a collision type, and a third seatbelt load limiting mechanism provided between the spool and the locking member to limit the load applied to the seatbelt in the emergency state.

According to the invention, in the seatbelt retractor of the invention, when the rotation of the locking member in the seatbelt withdrawal direction is blocked and the spool rotates relative to the locking member in the seatbelt withdrawal direction, the load applied to the seatbelt is limited by the first and the third seatbelt load limiting mechanisms in an initial stage, or the load applied to the seatbelt is limited by the first to the third seatbelt load limiting mechanisms (i.e. by the first, second and third seatbelt load limiting mechanisms) in the initial stage, and further limited only by the first seatbelt load limiting mechanism in at least a last stage.

According to a first embodiment, in the seatbelt retractor of the invention, the first seatbelt load limiting mechanism is formed of a torsion bar disposed between the spool and the locking member.

According to a second embodiment, in the seatbelt retractor of the invention, the second seatbelt load limiting mechanism includes a first energy absorber support member coaxially provided with the spool so as to be integrally rotatable, a second energy absorber support member coaxially attached to the first energy absorber support member, and an energy absorbing member between the first and the second energy absorber support member.

According to a third embodiment, in the seatbelt retractor of the invention, the third seatbelt load limiting mechanism includes an energy absorbing pin slidably inserted into a thin and long axial hole formed in the spool so as to pierce through the locking member such that the load applied to the seatbelt is limited by a load caused by pulling out the energy absorbing pin from the axial hole of the spool when the spool rotates relative to the locking member in the seatbelt withdrawn direction in the emergency state.

A seatbelt apparatus of the invention includes at least the seatbelt retractor according to the invention for retracting the seatbelt, a tongue slidably supported at the seatbelt withdrawn from the seatbelt retractor, and a buckle with which the tongue is detachably engaged. The seatbelt apparatus allows the seatbelt retractor to prevent withdrawal of the seatbelt in the emergency state to restrain an occupant.

### Effect of the Invention

The seatbelt retractor and the seatbelt apparatus using the seatbelt retractor of the present invention are structured to select the limited load applied to the seatbelt in the emergency state based on the information with respect to the emergency state, for example, the preliminarily known information (occupant's weight, seat slide position and the like), the collision forecast information for forecasting the collision, and the information with respect to the seriousness of the collision (for example, collision speed, acceleration/deceleration at the collision, type of the collision). This makes it possible to variably set the limited load applied to the seatbelt upon the vehicle collision with further flexibility in accordance with the emergency information such as the state at the collision, and the occupant's body size. This makes it possible to restrain the occupant upon the collision more effectively and appropriately.

Combining the second seatbelt load limiting mechanism having variable load limiting function with those first and the third seatbelt load limiting mechanisms each having the fixed load limiting function makes it possible to set the limited load applied to the seatbelt in the emergency state such as collision more effectively and appropriately.

With the seatbelt retractor according to the invention, when the rotation of the locking member in the seatbelt withdrawn direction is blocked to allow the spool to rotate relative to the locking member in the seatbelt withdrawal direction, the load applied to the seatbelt is limited by the first and the third seatbelt load limiting mechanisms in the initial stage, or the load applied to the seatbelt is limited by the first to the third seatbelt load limiting mechanisms in the initial stage, and the load is further limited only by the first seatbelt load limiting mechanism at least in the last stage. When the rotation of the locking member in the seatbelt withdrawal direction is blocked to allow the spool to rotate relative to the locking member in the seatbelt withdrawal direction, the load applied to the seatbelt may be largely limited by the first and the third seatbelt load limiting mechanisms or the first to the third seatbelt load limiting mechanisms in the initial stage, and then further limited only by the first seatbelt load limiting mechanism.

The seatbelt apparatus is intended to restrain the occupant to be protected in cooperation with the airbag in the emergency state. So the energy exerted to the occupant in the emergency state (generally referred to as the chest acceleration) is small in the initial stage as it is applied only through the seatbelt. However, as the airbag starts contacting the occupant, the energy of the airbag is added to gradually increase the energy. The present invention according to the first embodiment is structured to limit the load applied to the seatbelt to make the absorption of the energy exerted to the occupant with the arbitrary body size uniform in spite of the additional energy of the airbag operated in the emergency state.

For example, assuming that the body size of the occupant is small, the load applied to the seatbelt in the emergency state is limited by the first and the third seatbelt load limiting mechanisms. Assuming that the body size of the occupant is large, the load applied to the seatbelt is limited by the first to the third seatbelt load limiting mechanisms. Thereby, it is possible to make the absorption of the energy added by the airbag in operation exerted to the occupant with the arbitrary body size uniform. As the load to be limited in the initial stage may be changed depending on the body size of the occupant, the energy absorption in accordance with the body size of the occupant may be effectively performed.

The seatbelt retractor according to the first embodiment includes the second seatbelt load limiting mechanism coaxially with the spool. This makes it possible to make the seatbelt retractor compact in the vertical direction, thus increasing the effective space of the vehicle interior accordingly.

The seatbelt retractor according to the second embodiment employs the thin and long energy absorbing pin inserted into the axial hole of the spool as the third seatbelt load limiting mechanism. This makes it possible to make the structure of the third seatbelt load limiting mechanism simple, thus forming the seatbelt retractor further compact.

### Brief Description of the Drawings

Fig. 1 is a view showing an example of the seatbelt retractor according to the present invention with its structure partially omitted.
Fig. 2 is a sectional view taken along line II-II shown in Fig. 1.
Fig. 3 is a partially enlarged view of the seatbelt retractor shown in Fig. 1.
Fig. 4 is a block diagram showing a structure for controlling the second EA mechanism of the seatbelt retractor as the example shown in Fig. 1.
Fig. 5 is an explanatory view of the third EA mechanism using the energy absorbing pin, wherein Fig. 5(a) is a view showing the state before pull-out of the pin, Fig. 5(b) is a view showing the state where the pin is being pulled out, and Fig. 5(c) is a view showing the state where the pin is fully pulled out.
Figs. 6(a) to 6(e) are views each showing the EA operation in the seatbelt retractor as the example shown in Fig. 1.
Fig. 7 is a view showing the relationship between the rotation stroke of the spool and the limited load in the seatbelt retractor as the example shown in Fig. 1.
Fig. 8 is a view graphically showing an example of the seatbelt apparatus to which the seatbelt retractor shown in Fig. 1 is applied.
Fig. 9 is a longitudinal sectional view showing an example of a related art seatbelt retractor with a torsion bar.
Fig. 10 is a view graphically showing the other example of the related art seatbelt retractor with the torsion bar.
Fig. 11 is a view showing the property of the FL load of the related art shown in Fig. 10.

### Description of the Embodiments

The best mode for carrying out the present invention will be described referring to the drawings.

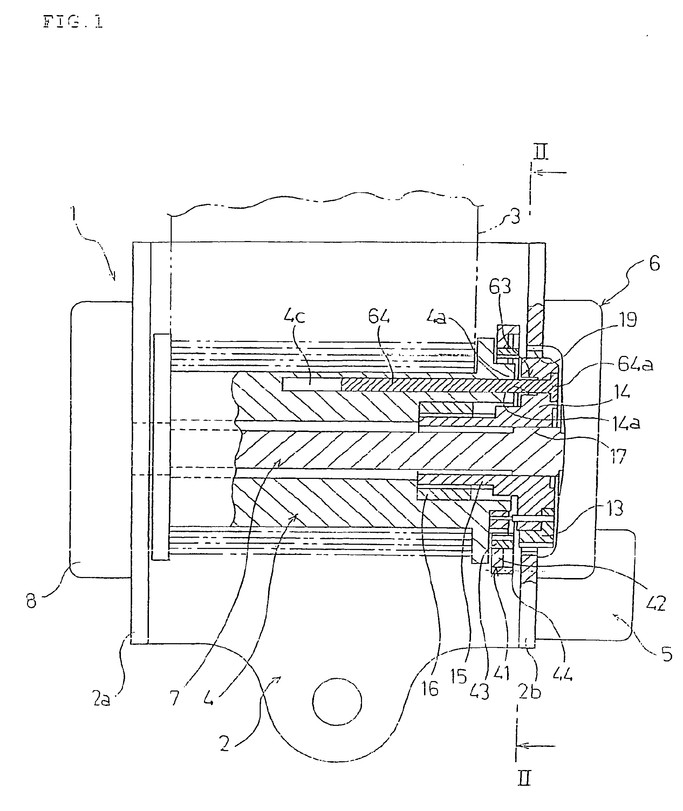

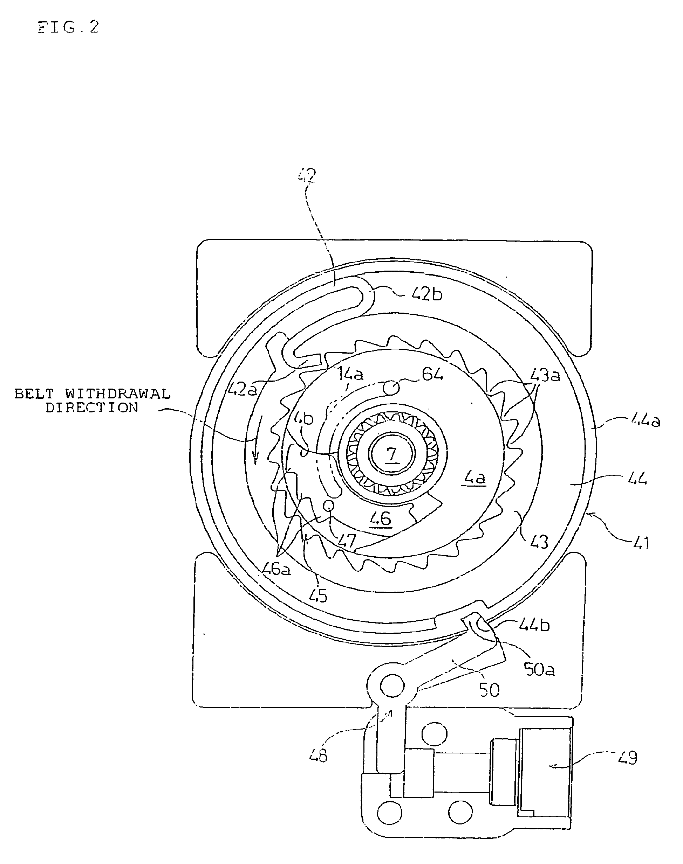

Fig. 1 shows an example of the embodiment of the seatbelt retractor according to the present invention having a part of the structure omitted. Fig. 2 is a sectional view taken along line II-II shown in Fig. 1. In the respective explanations of the examples, the same components as those of the previous explanation and the seatbelt retractor 1 as related art shown in Fig. 9 will be designated with the same reference numerals, and explanations thereof, thus will be omitted.

Referring to Fig. 1, likewise the seatbelt retractor 1 as the related art shown in Fig. 9, the seatbelt retractor 1 in the example includes a U-shaped frame 2, a seatbelt 3, a spool 4 which retracts the seatbelt 3, and a torsion bar 7 as a first energy absorbing member of a first EA mechanism (corresponding to the first seatbelt load limiting mechanism of the present invention). Likewise the seatbelt retractor 1 as the related art shown in Fig. 9, the seatbelt retractor 1 of the example includes a deceleration detection unit 5, a lock unit 6, and a spring member 8 (not shown) as well as the pretensioner that is the same as the aforementioned pretensioner 11 and a bush that is the same as the aforementioned bush 12 for transmitting the seatbelt retracting torque generated by the pretensioner 11 to the spool 4.

The seatbelt retractor 1 includes a second EA mechanism (corresponding to the second seatbelt load limiting mechanism) 41 on the outer circumference of the support shaft portion 4a which protrudes from the end surface of the spool 4 at the side of the locking base 14 coaxially with the spool 4. Referring to Fig. 2, the second EA mechanism 41 includes a strip-like energy absorbing plate 42 as the second energy absorbing member, a ring-like first energy absorber support member 43 which is supported by the support shaft portion 4a of the spool 4 rotatably relative thereto and has the ratchet teeth 43a as the inner teeth, and a second energy absorber support member 44 supported by the first energy absorber support member 43 rotatably relative thereto.

The energy absorbing plate 42 is a strip-like plate with predetermined thickness and width, and formed into substantially C-like shape. The energy absorbing plate 42 may be formed into a linear shape. One end of the energy absorbing plate 42, that is, a first support portion 42a is fixedly supported at the first energy absorber support member 43, and the other end slidably supported at the second energy absorber support member 44. A U-shaped portion 42b is formed by bending the energy absorbing plate 42 at the portion around the first support portion 42a.

The second energy absorber support member 44 is formed into a disk-like shape, and has an annular flange 44a on its outer circumference. The first support portion 42a of the energy absorbing plate 42 is fixedly supported at the first energy absorber support member 43, and the portion defined by the U-shaped portion 42b of the energy absorbing plate 42 to the other end abuts against the inner peripheral surface of the flange 44a of the second energy absorber support member 44.

A clutch mechanism 45 is provided between the support shaft portion 4a of the spool 4 and the first energy absorber support member 43 to rotatably connect relative to the respective rotating operations of those members in the belt withdrawal direction. The clutch mechanism 45 includes an annular clutch pawl 46 having a predetermined number of fixing claws 46a engageable with ratchet teeth 43a of the first energy absorber support member 43 at one side. The clutch pawl 46 is slidably supported on the support surface 4b which is curved into a predetermined shape at the support shaft portion 4a.

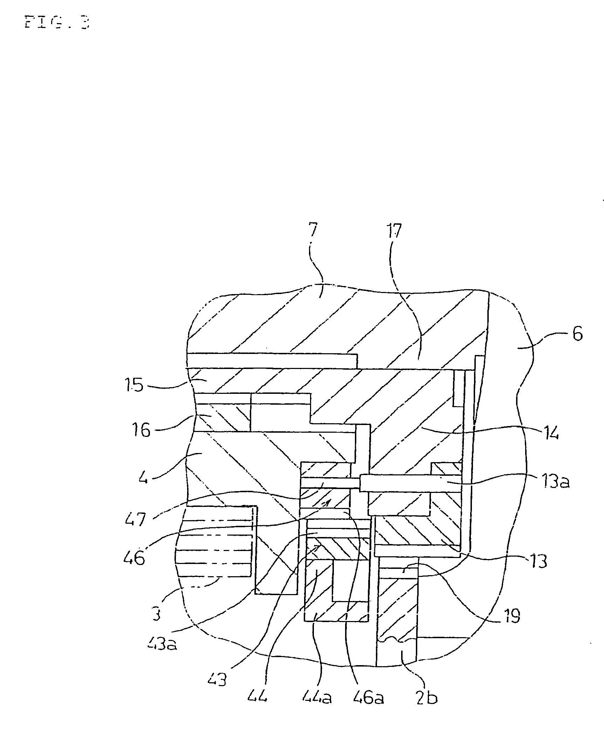

Referring to Fig. 3, the clutch pawl 46 is provided rotatably with a shear pin 47 which is integrally and coaxially attached to a rotating shaft 13a of the pawl 13 of the lock unit 6. When the pawl 13 rotates to block the rotation of the locking base 14 in the belt withdrawal direction in the emergency state, the clutch pawl 46 is rotated by the rotation of the pawl 13 such that the fixing claw 46a of the clutch pawl 46 is engaged with the ratchet teeth 43a.

When the pawl 13 rotates to be engaged with the inner teeth 19 on the side wall 2b of the frame 2 in the emergency state where the deceleration detection unit 5 is activated, the clutch pawl 46 is rotated associated with the rotation of the pawl 13 such that the fixing claw 46a is engaged with the ratchet teeth 43a of the first energy absorber support member 43 in the belt withdrawal direction to connect the clutch mechanism 45. The connection to the clutch mechanism 45 allows the rotatable connection between the spool 4 and the first energy absorber support member 43 at least in the belt withdrawal direction. When the pawl 13 is engaged with the inner teeth 19 of the frame 2, the rotation of the locking base 14 in the belt withdrawal direction is locked. Meanwhile, the seatbelt 3 is likely to be withdrawn by the inertia of the occupant to keep the spool 4 rotating in the belt withdrawal direction. Relatively large shear load is applied to the shear pin 47 to be ruptured.

When the pawl 13 is engaged with the inner teeth 19 of the frame 2, and the fixing claw 46a of the clutch pawl 46 is engaged with the ratchet teeth 43a in the emergency state, the shear pin 47 is shear ruptured. When the shear rupture occurs in the shear pin 47, the clutch pawl 46 moves relative to the spool 4 toward upstream of its rotation in the belt withdrawal direction while keeping the fixing claw 46a engaged with the ratchet teeth 43a. The clutch pawl 46 is inserted into the portion between the support surface 4b of the support shaft portion 4a of the spool 4 and the first energy absorber support member 43 so as to stop the relative movement to the spool 4. The rotatable connection between the spool 4 and the first energy absorber support member 43 in the belt withdrawal direction may be securely held. Then the rotation of the spool 4 in the belt withdrawal direction is transmitted to the first energy absorber support member 43 via the clutch pawl 46 such that the first energy absorber support member 43 rotates in the belt withdrawal direction as shown by arrow.

Referring to Fig. 2, the side wall 2b of the frame 2 is provided with an operation control member 48 which controls the EA operation of the second EA mechanism 41, and a drive member 49 which drives the operation control member 48. The operation control member 48 is formed of a lever 50 rotatably supported at the side wall 2b of the frame 2. An engagement protrusion 50a bent at 90° is formed at the tip of the lever 50. The engagement protrusion 50a is normally fit with an engagement recess portion 44b formed in the flange 44a of the second energy absorber support member 44.

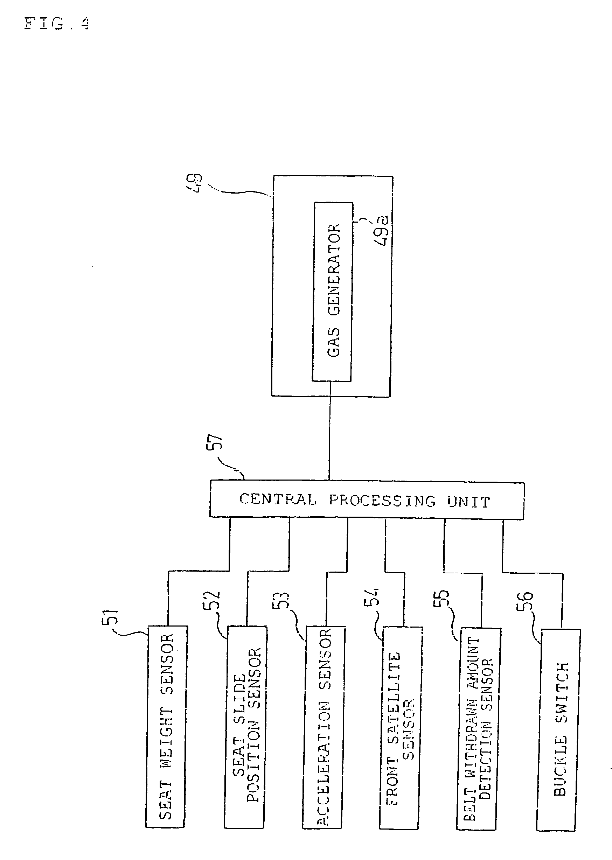

The second EA mechanism 41 forms the limited load set unit of the present invention. The drive member 49 includes a gas generator 49a (not shown in Fig. 2: shown in Fig. 4) therein which is activated in the emergency state to generate the reaction gas. The thus generated reaction gas serves to activate the drive member 49 to rotate the lever 50 of the operation control member 48 clockwise as shown in Fig. 2 so as to disengage the engagement protrusion 50a from the engagement recess portion 44b.

Referring to Fig. 4, in the second EA mechanism 41 of the example, operations of the gas generator 49a of the drive member 49 are controlled by a CPU 57 in accordance with the emergency state based on the respective signals output from a seat weight sensor 51, a seat slide position detection sensor 52, an acceleration sensor 53, a front satellite sensor 54, a belt withdrawn amount detection sensor 55, and a buckle switch 56. When the drive member 49 is not activated, and the engagement protrusion 50a of the lever 50 of the operation control member 48 is not disengaged from the engagement recess portion 44b, the load applied to the seatbelt 3 is limited under the control of the second EA mechanism 41. When the engagement protrusion 50a of the lever 50 is disengaged from the engagement recess portion 44b, the load applied to the seatbelt 3 is not limited by the second EA mechanism 41. Accordingly, the load limiting operation performed by the second EA mechanism 41 may be selected between the mode where the load limitation is performed in the emergency state and the mode where the load limitation is not performed.

In the seatbelt retractor 1, the third EA mechanism (corresponding to the third seatbelt load limiting mechanism of the present invention) 63 is provided between the spool 4 and the locking base 14. The third EA mechanism 63 serves as a third energy absorbing member, and includes a thin and long energy absorbing pin 64 extending in the axial direction of the spool 4. The energy absorbing pin 64 is slidably inserted into a thin and long axial hole 4c formed in the position eccentric to the spool 4 to extend in the axial direction, and pierces through the locking base 14. The energy absorbing pin 64 which pierces through the locking base 14 is provided with a flange 64a at one end. The flange 64a is fixed to the locking base 14 to prevent removal of the energy absorbing pin 64 toward the spool 4.

A guide groove 14a for guiding the energy absorbing pin 64 is formed at the position through which the energy absorbing pin 64 pierces in the side surface opposite the spool 4 of the locking base 14. Referring to the chain double-dashed line in Fig. 2, the guide groove 14a is formed like an arc concentric to the locking base 14. The length of the arc-like portion is set such that the energy absorbing pin 64 is completely stored after its energy absorbing operation. In the normal state before the energy absorbing operation is performed by the energy absorbing pin 64, it is kept as the linear shape as shown in Fig. 1.

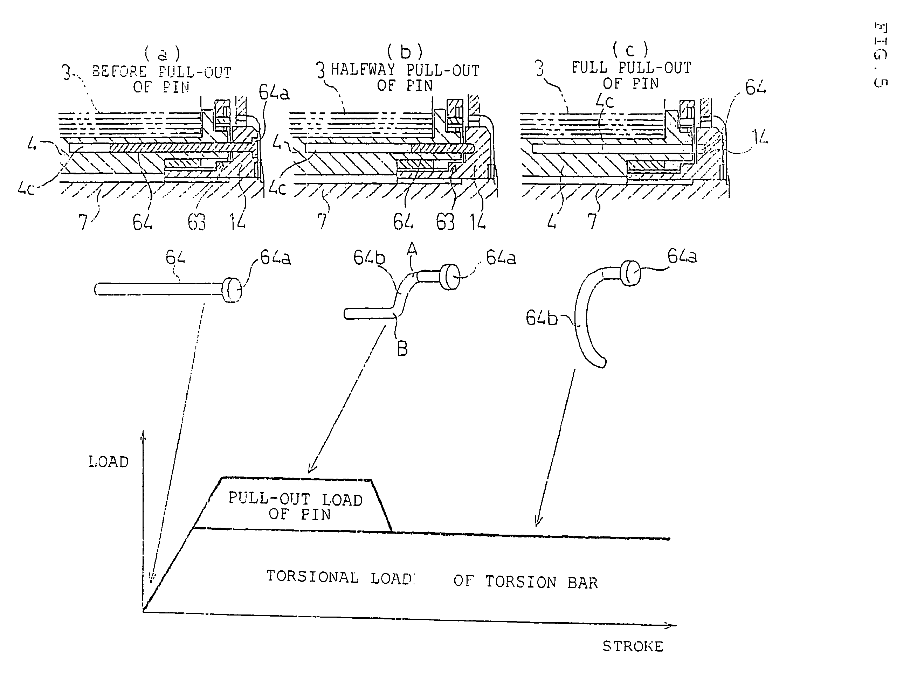

Referring to Fig. 5(a), in the normal state of the third EA mechanism before pull-out of the pin, the energy absorbing pin 64 is not pulled out from the axial hole 4c of the spool 4, and accordingly kept linearly shaped. In the emergency state, the rotation of the locking base 14 in the seatbelt withdrawal direction is blocked. Then the torsion bar 7 is twisted such that only the spool 4 rotates relative to the locking base 14 in the belt withdrawal direction. At this time, the pull-out of the energy absorbing pin 64 from the axial hole 4c of the spool 4 is started. Referring to Fig. 5(b), the energy absorbing pin 64 is bent at two points A and B at right angles upon the pull-out from the axial hole 4c. The pulled out energy absorbing pin 64b is guided with the guide groove 14a of the locking base 14 so as to be curved into the arc shaped.

The load which has been limited by the pull-out resistance of the energy absorbing pin 64 from the axial hole 4c, the deformation of the energy absorbing pin 64 through bending, and the deformation of the energy absorbing pin 64 through curving is applied to the seatbelt as the limited load as shown in Fig. 5. Although the load gradually increases, it is kept constant in the process of the pull-out of the energy absorbing pin 64 by the predetermined amount as shown in Fig. 5(b). In the aforementioned state, the limited load becomes the value obtained by adding the torsional deformation load of the torsion bar 7 to the pull-out load of the energy absorbing pin 64.

Referring to Fig. 5(c), when the energy absorbing pin 64 is fully pulled out, the pull-out load thereof disappears, and the torsional deformation load of the torsion bar 7 only exists. The load limiting operation is fixed to be always performed by the third EA mechanism 63 in the emergency state.

The operation of the thus structured seatbelt retractor 1 will be described.

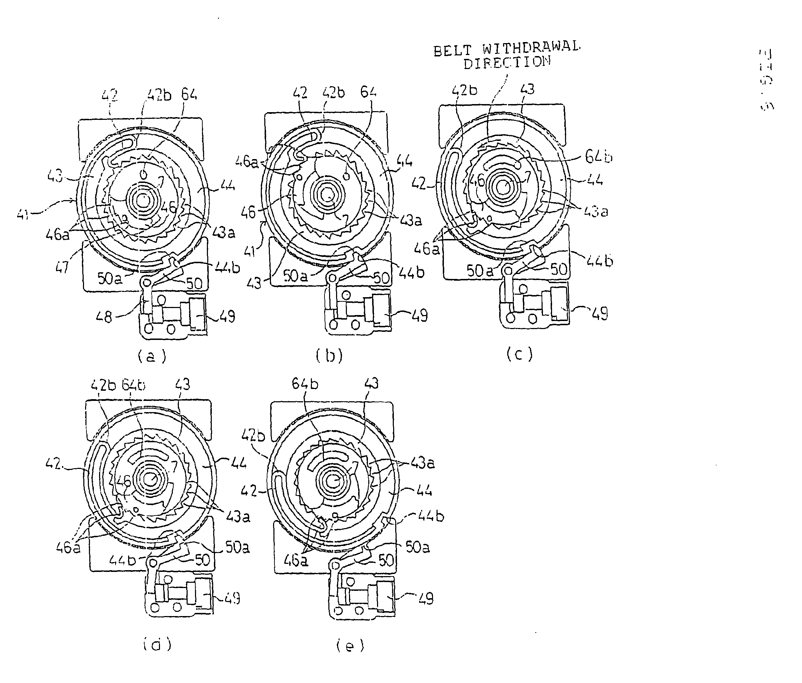

Referring to Fig. 6(a), in the initial state where the seatbelt retractor 1 is not operated, the fixing claw 46a of the clutch pawl 46 is not engaged with the ratchet teeth 43a, and the clutch mechanism 45 is in Off state. Accordingly, the spool 4 is disconnected from the first energy absorber support member 43 with respect to the rotating operation. The drive member 49 is not operated, and the engagement protrusion 50a of the lever 50 of the operation control member 48 is fit with the engagement recess portion 44b of the second energy absorber support member 44. The second energy absorber support member 44 is disabled to rotate.

In the emergency state as described above, the seatbelt retracting torque generated by the pretensioner 11 rotates the spool 4 in the belt retracting direction (clockwise in the drawing) as shown Fig. 6(b) to retract the seatbelt 3 by a predetermined amount so as to fixedly restrain the occupant. As the spool 4 and the locking base 14 are rotated in the belt withdrawal direction by the occupant's inertia, the pawl 13 rotates to block the rotation of the locking base 14 in the belt withdrawal direction. The torsion bar 7 is torsionally deformed likewise the related art such that the energy of the torsion bar 7 is absorbed. At the same time, the clutch pawl 46 rotates to bring its fixing claw 46a into engagement with the ratchet teeth 43a as shown in Fig. 6(b). That is, the clutch mechanism 45 is brought into On state such that the spool 4 is disconnected from the first energy absorber support member 43 with respect to the rotating operation in the belt withdrawal direction. In this case, the drive member 49 is not activated, and the second energy absorber support member 44 is kept disabled to rotate.

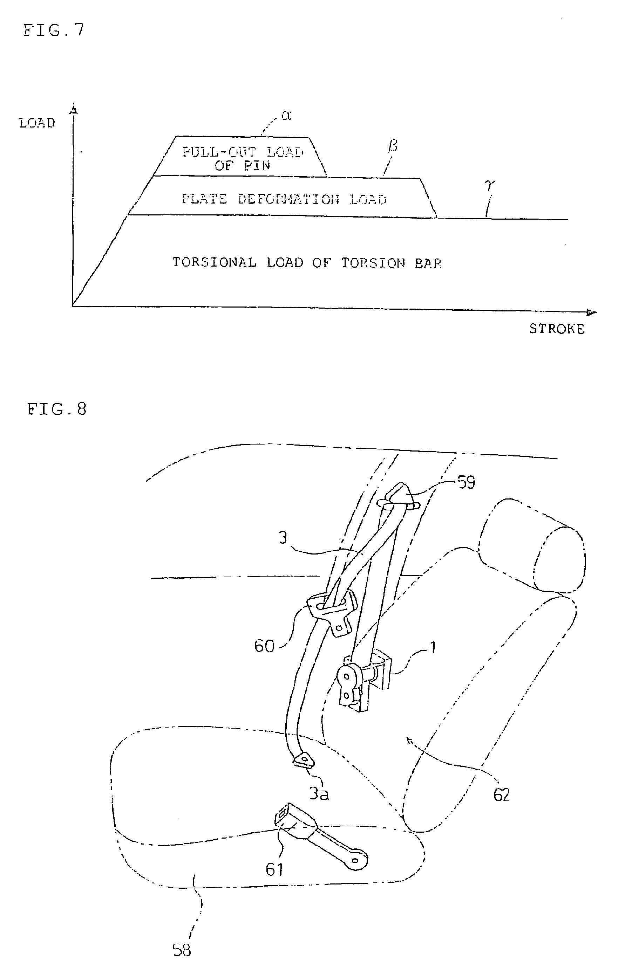

Accompanied with the rotation of the spool 4 in the belt withdrawal direction by the occupant's inertia, the rotation of the spool 4 is transmitted to the first energy absorber support member 43 via the clutch mechanism 45. Referring to Fig. 6(c), the first energy absorber support member 43 also rotates in the belt withdrawal direction (counterclockwise in Fig. 6(c)). The first support portion 42a of the energy absorbing plate 42 also rotates in the same direction together with the rotation of the first energy absorber support member 43. The energy absorbing plate 42 is deformed while its U-shaped portion 42b gradually moving toward the other end portion. The second EA mechanism 41 thus absorb the energy. Further, the energy absorbing pin 64 of the third EA mechanism 63 is deformed through bending at right angles, and further deformed into the arc-shape through curving. The third EA mechanism 63 thus absorbs the energy. In this way, the energy is effectively absorbed through the aforementioned operations of the torsion bar 7, the second EA mechanism 41, and the third EA mechanism 63. The limited load applied to the seatbelt 3 at this time becomes the value obtained by summing the torsional deformation load of the torsion bar 7, the deformation load of the energy absorbing plate 42, and the pull-out load of the energy absorbing pin 64 as shown by α in Fig. 7. The limited load applied to the seatbelt 3 becomes larger initially by the torsion bar 7, and the second and the third EA mechanisms 41 and 63, respectively.

Referring to Fig. 5(c), when the energy absorbing pin 64 is fully pulled out, the energy absorption performed by the third EA mechanism 63 is finished. The load becomes the value obtained by summing the torsional deformation load of the torsion bar 7 and the deformation load of the energy absorbing plate 42 as shown by β in Fig. 7. More energy is absorbed by the torsion bar 7 and the second EA mechanism 41 so as to change the limited load applied to the seatbelt 3.

Based on the output signals from the respective sensors 51, 52, 53, 54, 55 and the buckle switch 56, the CPU 37 recognizes the current state as the emergency. When it is determined that the energy absorption performed by the second EA mechanism 41 is no longer required, the CPU 37 activates the gas generator 49a of the drive member 49. Referring to Fig. 6(d), the gas generator 49a generates the reaction gas which drives the drive member 49 to rotate the lever 50 of the operation control member 48 clockwise. As the engagement protrusion 50a of the lever 50 is disengaged from the engagement recess portion 44, the second energy absorber support member 44 becomes rotatable.

Then referring to Fig. 6(e), the second energy absorber support member 44 rotates in the belt withdrawal direction together with the spool 4 and the first energy absorber support member 43. The U-shaped portion 42b stops moving toward the other end side such that the energy absorbing plate 42 is not deformed. The second EA mechanism 41 finishes the energy absorption, and the torsional deformation load of the torsion bar 7 only exists as the limited load as shown by γ in Fig. 7. In this way, more energy is absorbed only by the torsion bar 7 to further change the limited load applied to the seatbelt 3. When the energy absorption performed by the second EA mechanism 41 is required, the seatbelt retractor 1 is structured to set the limited load in three stages.

Based on the output signals from the respective sensors 51, 52, 53, 54, 55 and the buckle switch 56, the CPU 37 recognizes the current state as emergency. When it is determined that the energy absorption performed by the second EA mechanism in the initial stage is not required, the CPU 37 activates the gas generator 49a of the drive member 49. This allows the second energy absorber support member 44 to be rotatable such that the energy absorbing plate 42 is not deformed as described above. The second EA mechanism 41, thus, does not perform the energy absorption. At this time, the limited load becomes the value obtained by summing the torsional deformation load of the torsion bar 7, and the pull-out load of the energy absorbing pin 64 of the third EA mechanism 63.

Referring to Fig. 5(c), when the energy absorbing pin 64 is fully pulled out, the energy absorption performed by the third EA mechanism 63 is finished. The load of the torsion bar 7 only exists as the limited load applied to the seatbelt 3 in the last stage. In this way, more energy is absorbed only by the torsion bar 7 to further change the limited load applied to the seatbelt 3. When the energy absorption performed by the second EA mechanism 41 is not required, the seatbelt retractor 1 is structured to set the limited load in two stages.

The seatbelt retractor 1 is structured to change the limited load applied to the seatbelt 3 in the emergency state by the second EA mechanism 41 which allows the limited load to be variable based on the emergency state information, that is, the preliminarily known information (for example, occupant's weight and the seat slide position), the collision forecast information which forecasts the collision, and the collision seriousness information (collision speed, acceleration/deceleration upon collision, collision type). The limited load applied to the seatbelt 3 may be variably set with further flexibility depending on the emergency state and the emergency information such as the occupant's body size. This makes it possible to effectively and appropriately restrain the occupant in the emergency state.

Combining the second EA mechanism 41 where the limited load is variably set with the first EA mechanism and the third EA mechanism 63 where the limited load is fixed makes it possible to set the limited load applied to the seatbelt in the emergency state effectively. Accordingly, the occupant may be restrained further effectively and appropriately.

When the rotation of the locking base 14 in the seatbelt withdrawal direction is blocked, and the spool 4 rotates relative to the locking base 14 in the seatbelt withdrawal direction, the load applied to the seatbelt 3 is limited by the torsion bar 7 and the third EA mechanism 63 in the initial state, or the load is limited by the torsion bar 7 and the second and the third seatbelt load limiting mechanisms 41 and 63 in the initial stage, and further limited only by the torsion bar 7 in the last stage. When the rotation of the locking base 14 in the seatbelt withdrawal direction is blocked, and the spool 4 rotates relative to the locking base 14 in the seatbelt withdrawal direction, the load applied to the seatbelt 3 may be largely limited by the torsion bar 7 and the third EA mechanism 63 in the initial stage, or largely limited by the torsion bar 7 and the second and the third seatbelt load limiting mechanisms 41, 63 in the initial stage, and further limited only by the torsion bar 7 in the last stage.

Conventionally, the energy applied to the occupant in the emergency state (normally referred to as the chest acceleration) is small as it is transmitted only through the seatbelt 3. When the airbag starts contacting the occupant, the energy of the airbag is added to the aforementioned energy to become gradually large, failing to perform the uniform energy absorption. The effective load limitation performed by the EA mechanisms as described above limits the load applied to the seatbelt 3 even if the energy of the airbag activated in the emergency state is added. This allows the energy absorption to be made uniform irrespective of the body size of the occupant, resulting in the effective energy absorption.

As the second EA mechanism 41 is provided coaxially with the spool 4, the seatbelt retractor 1 may be made compact in the vertical direction. This makes it possible to increase the effective space of the vehicle interior.

The third EA mechanism 63 employs the thin and long energy absorbing pin 64 to be inserted into the axial hole 4c of the spool 4. The structure of the third EA mechanism 63, thus, may become simple and the seatbelt retractor 1 may further become compact.

The aforementioned seatbelt retractor 1 is applicable to the one employed in the conventional seatbelt apparatus. The seatbelt apparatus 62, for example as shown in Fig. 8, to which the aforementioned seatbelt retractor 1 is applied includes the seatbelt retractor 1 fixed to the vehicle body, the seatbelt 3 withdrawn from the seatbelt retractor 1, having a belt anchor 3a at the tip fixed to the floor of the vehicle body or the vehicle seat 58, a guide anchor 59 for guiding the seatbelt 3 withdrawn from the seatbelt retractor 1 to the shoulder of the occupant, a tongue 60 slidably supported at the seatbelt 3 which has been guided with the guide anchor 59, and the buckle 61 fixed to the floor of the vehicle body or the vehicle seat, and allows the tongue 60 to be detachably inserted to be engaged therewith.

In the aforementioned example, the gas generator 49a is employed as the drive member 49 for rotating the lever 50 of the operation control member 48. The present invention is not limited to the one as described above. The lever 50 may be rotated by any other unit as the drive member 49, for example, the electromagnetic force derived from the solenoid. In the aforementioned case, the solenoid may be driven and controlled by the CPU 57 in the same way as the aforementioned example.

In the aforementioned example, the energy absorbing pin 64 is used as the third EA mechanism 63. In this case, the pull-out of the energy absorbing pin 64 limits the load applied to the seatbelt 3. The EA mechanism having the energy absorbing plate like the second EA mechanism 41 having the energy absorbing plate 42 may be employed as the third EA mechanism 63. In the aforementioned case, the length of the energy absorbing plate may be made longer than that of the energy absorbing pin 64 (the length of the energy absorbing pin 64 is required to be shorter than that of the spool 4 in the axial direction). This makes it possible to increase the rotation stroke of the spool 4 for which the limited load by the energy absorbing plate is set. However, it is preferable to use the energy absorbing pin 64 as the third EA mechanism 64 in order to simplify and reduce the size of the structure of the seatbelt retractor including the respective EA mechanisms.

### Applicability in the Technical Field

The seatbelt retractor is used in the seatbelt apparatus installed in the vehicle such as an automobile for limiting the load applied to the seatbelt in the emergency state such as collision to prevent withdrawal of the seatbelt while absorbing and alleviating the energy exerted to the occupant.

## Claims

1. A seatbelt retractor, comprising:
a spool (4) which retracts a seatbelt (3),
a lock unit (6) provided with a locking member (14) that rotates together with the spool (4) upon transmission of a rotation of the spool (4) via a first seatbelt load limiting mechanism (7) in a normal state and the rotation in a seatbelt withdrawal direction is blocked in an emergency state, the first seatbelt load limiting mechanism (7) limiting a load applied to the seatbelt (3) when the rotation of the locking member (14) in the seatbelt withdrawal direction is blocked to allow the spool (4) to rotate relative to the locking member (14) in the seatbelt withdrawal direction, and
a second seatbelt load limiting mechanism (41) coaxially provided with the spool (4) which changes a limited load applied to the seatbelt (3) in the emergency state based on information of the emergency state including an occupant's body size, a seat slide position, a collision speed, the collision at acceleration/deceleration, and a collision type, **characterized by**
a third seatbelt load limiting mechanism (63) provided between the spool (4) and the locking member (14) to limit the load applied to the seatbelt (3) in the emergency state,
wherein when the rotation of the locking member (14) in the seatbelt withdrawal direction is blocked and the spool (4) rotates relative to the locking member (14) in the seatbelt withdrawal direction, the load applied to the seatbelt (3) is limited in an initial state selectively based on the information of the emergency state either by the first (7) and the third (63) seatbelt load limiting mechanisms or by the first to third seatbelt load limiting mechanisms (7, 41, 63), while the load applied to the seatbelt (3) is further limited only by the first seatbelt load limiting mechanism (7) in at least a last stage.

2. The seatbelt retractor according to Claim 1, wherein the first seatbelt load limiting mechanism is formed of a torsion bar (7) disposed between the spool (4) and the locking member (14).

3. The seatbelt retractor according to Claim 1 or 2, wherein the second seatbelt load limiting mechanism (41) includes a first energy absorber support member (43) coaxially provided with the spool (4) so as to be integrally rotatable, a second energy absorber support member (44) coaxially attached to the first energy absorber support member (43), and an energy absorbing member (42) between the first (43) and the second (44) energy absorber support member.

4. The seatbelt retractor according to any one of Claims 1 to 3, wherein the third seatbelt load limiting mechanism (63) includes an energy absorbing pin (64) slidably inserted into a thin and long axial hole (4c) formed in the spool (4) so as to pierce through the locking member (14) such that the load applied to the seatbelt (3) is limited by a load caused by pulling out the energy absorbing pin (64) from the axial hole (4c) of the spool (4) when the spool (4) rotates relative to the locking member (14) in the seatbelt withdrawn direction in the emergency state.

5. A seatbelt apparatus comprising at least a seatbelt retractor (1) according to any one of Claims 1 to 4 for retracting a seatbelt (3), a tongue (60) slidably supported at the seatbelt withdrawn from the seatbelt retractor (1), and a buckle (61) with which the tongue (60) is detachably engaged, wherein the seatbelt apparatus (62) allows the seatbelt retractor (1) to prevent withdrawal of the seatbelt (3) in the emergency state to restrain an occupant.

## Patentansprüche

1. Sitzgurt-Aufrollvorrichtung, umfassend:
eine Spule (4), welche einen Sitzgurt (3) aufrollt,
eine Verriegelungseinheit (6), welche mit einem Verriegelungsteil (14) versehen ist, welches sich zusammen mit der Spule (4) gemäß einer Übersetzung einer Drehung der Spule (4) mittels eines ersten eine Belastung des Sitzgurts begrenzenden Mechanismus (7) in einem normalen Zustand dreht und wobei die Drehung in einer den Sitzgurt abwickelnden Richtung in einem Notzustand blockiert ist, wobei der erste die Belastung des Sitzgurts begrenzende Mechanismus (7) eine Belastung begrenzt, welche auf den Sitzgurt (3) aufgebracht wird, wenn die Drehung des Verriegelungsteils (14) in der den Sitzgurt abwickelnden Richtung blockiert wird, um der Spule (4) zu ermöglichen, sich relativ zu dem Verriegelungsteil (14) in der den Sitzgurt abwickelnden Richtung zu drehen; und
einen zweiten eine Belastung des Sitzgurts begrenzenden Mechanismus (41), welcher koaxial zu der Spule (4) vorhanden ist und welcher eine begrenzte Belastung, welche in dem Notzustand auf den Sitzgurt (3) aufgebracht wird, abhängig von einer Information des Notzustands, welche eine Körpergröße eines Insassen, eine Sitzschienenposition, eine Kollisionsgeschwindigkeit, die Beschleunigung/Abbremsung während der Kollision und eine Kollisionsart einschließt, ändert,
**dadurch gekennzeichnet,**
**dass** ein dritter eine Belastung des Sitzgurts begrenzender Mechanismus (63) zwischen der Spule (4) und dem Verriegelungsteil (14) vorhanden ist, um die Belastung, welche in dem Notzustand auf den Sitzgurt (3) aufgebracht wird, zu begrenzen,
wobei, wenn die Drehung des Verriegelungsteils (14) in der den Sitzgurt abwickelnden Richtung blockiert wird und sich die Spule (4) relativ zu dem Verriegelungsteil (14) in der den Sitzgurt abwickelnden Richtung dreht, die Belastung, welche auf den Sitzgurt (3) aufgebracht wird, in einem Anfangszustand selektiv abhängig von der Information des Notzustands entweder durch den ersten (7) und durch den dritten (63) die Belastung des Sitzgurts begrenzenden Mechanismus oder durch den ersten bis dritten die Belastung des Sitzgurts begrenzenden Mechanismus (7, 41, 63) begrenzt wird, während die Belastung, welche auf den Sitzgurt (3) aufgebracht wird, darüber hinaus in zumindest einer letzten Stufe nur durch den ersten die Belastung des Sitzgurts begrenzenden Mechanismus (7) begrenzt wird.

2. Sitzgurt-Aufrollvorrichtung nach Anspruch 1, **dadurch gekennzeichnet, dass** der erste die Belastung des Sitzgurts begrenzende Mechanismus aus einem Torsionsstab (7) ausgebildet ist, welcher zwischen der Spule (4) und dem Verriegelungsteil (14) angeordnet ist.

3. Sitzgurt-Aufrollvorrichtung nach Anspruch 1 oder 2, **dadurch gekennzeichnet, dass** der zweite die Belastung des Sitzgurts begrenzende Mechanismus (41) ein erstes Energie absorbierendes Halteteil (43), welches koaxial mit der Spule (4) vorhanden ist, um so ganzheitlich drehbar zu sein, ein zweites Energie absorbierendes Halteteil (44), welches koaxial an dem ersten Energie absorbierenden Halteteil (43) angebracht ist, und ein Energie absorbierendes Teil (42) zwischen dem ersten (43) und dem zweiten (44) Energie absorbierenden Halteteil aufweist.

4. Sitzgurt-Aufrollvorrichtung nach einem der Ansprüche 1 bis 3, **dadurch gekennzeichnet, dass** der dritte die Belastung des Sitzgurts begrenzende Mechanismus (63) einen Energie absorbierenden Stift (64) aufweist, welcher gleitend in ein dünnes und langes axiales Loch (4c) eingeführt ist, welches in der Spule (4) ausgebildet ist, um so durch das Verriegelungsteil (14) einzudringen, so dass die Belastung, welche auf den Sitzgurt (3) aufgebracht wird, durch eine Belastung begrenzt ist, welche verursacht wird, indem der Energie absorbierende Stift (64) von dem axialen Loch (4c) der Spule (4) herausgezogen wird, wenn sich die Spule (4) relativ zu dem Verriegelungsteil (14) in der den Sitzgurt abwickelnden Richtung in dem Notzustand dreht.

5. Sitzgurt-Vorrichtung, welche zumindest eine Sitzgurt-Aufrollvorrichtung (1) nach einem der Ansprüche 1 bis 4 zum Aufrollen eines Sitzgurts (3), eine Zunge (60), welche gleitend an dem Sitzgurt gehalten wird, welcher von der Sitzgurt-Aufrollvorrichtung (1) abgewickelt ist, und ein Gurtschloss (61), mit welchem sich die Zunge (60) lösbar in Eingriff befindet, umfasst, wobei die Sitzgurt-Vorrichtung (62) der Sitzgurt-Aufrollvorrichtung (1) ermöglicht, ein Abwickeln des Sitzgurts (3) in dem Notzustand zu verhindern, um einen Insassen zurückzuhalten.

## Revendications

1. Enrouleur de ceinture de sécurité comprenant
une bobine (4) qui rétracte la ceinture de sécurité (3)
une unité de verrouillage (6) muni d'un élément de verrouillage (14) qui tourne avec la bobine (4) lors de la transmission d'une rotation de la bobine (4) par l'intermédiaire d'un premier mécanisme de limitation de charge de ceinture de sécurité (7) dans un état normal et la rotation dans une direction de retrait de ceinture de sécurité est bloquée dans un état d'urgence, le premier mécanisme de limitation de charge de ceinture de sécurité (7) limitant une charge appliquée à la ceinture de sécurité (3) lorsque la rotation de l'élément de verrouillage (14) dans la direction de retrait de la ceinture de sécurité est bloquée pour permettre à la bobine (4) de tourner par rapport à l'élément de verrouillage (14) dans la direction de retrait de la ceinture de sécurité, et :
un deuxième mécanisme de limitation de charge de ceinture de sécurité (41) disposé coaxialement avec la bobine (4) et qui modifie une charge limitée appliquée à la ceinture de sécurité (3) dans l'état d'urgence sur la base d'informations de l'état d'urgence comprenant la taille du corps d'un occupant, une position de coulissement de siège, une vitesse de collision, la collision à l'accélération/décélération, et un type de collision, **caractérisé par**
un troisième mécanisme de limitation de charge de ceinture de sécurité (63) prévu entre la bobine (4) et l'élément de verrouillage (14) pour limiter la charge appliquée à la ceinture de sécurité (3) à l'état d'urgence,
dans lequel lorsque la rotation de l'élément de verrouillage (14) dans la direction de retrait de la ceinture de sécurité est bloquée et la bobine (4) tourne par rapport à l'élément de verrouillage (14) dans la direction de retrait de la ceinture de sécurité, la charge appliquée à la ceinture de sécurité (3) est limitée dans un état initial basé sélectivement sur l'information de l'état d'urgence fournie soit par le premier (7) et le troisième (63) mécanisme de limitation de charge de ceinture de sécurité, soit par les premier au troisième mécanismes de limitation de charge de ceinture de sécurité (7, 41, 63) tandis que la charge appliquée à la ceinture de sécurité (3) est en outre limitée uniquement par le premier mécanisme de limitation de charge de ceinture de sécurité (7) dans au moins une dernière étape.

2. Enrouleur de ceinture de sécurité selon la revendication 1, dans lequel le premier mécanisme de limitation de charge de ceinture de sécurité est formé d'une barre de torsion (7) disposée entre la bobine (4) et l'élément de verrouillage (14).

3. Enrouleur de ceinture de sécurité selon l'une quelconque des revendications 1 ou 2, dans lequel le deuxième mécanisme de limitation de charge de ceinture de sécurité (41) comprend un premier élément de support d'absorbeur d'énergie (43) disposé coaxialement avec la bobine (4) de manière à être solidaire en rotation, un deuxième élément de support d'absorbeur d'énergie (44) fixé coaxialement au premier élément de support d'absorbeur d'énergie (43), et un élément d'absorption d'énergie (42) entre le premier (43) et le deuxième (44) élément de support d'absorbeur d'énergie.

4. Enrouleur de ceinture de sécurité selon l'une quelconque des revendications 1 à 3, dans lequel le troisième mécanisme de limitation de charge de ceinture de sécurité (63) comprend une goupille d'absorption d'énergie (64) insérée de façon coulissante dans un orifice axial, mince et long (4c), formé dans la bobine (4) de manière à percer à travers l'élément de verrouillage (14) de telle sorte que la charge appliquée à la ceinture de sécurité (3) est limitée par une charge provoquée par le retrait de la goupille d'absorption d'énergie (64) de l'orifice axial (4c) de la bobine (4) lorsque la bobine (4) tourne par rapport à l'élément de verrouillage (14) dans la direction de rétraction de la ceinture de sécurité dans l'état d'urgence.

5. Dispositif formant ceinture de sécurité comprenant au moins un enrouleur de ceinture de sécurité (1) selon l'une quelconque des revendications 1 à 4 pour rétracter une ceinture de sécurité (3), une languette (60) supportée de manière coulissante à la rétraction de la ceinture de sécurité de l'enrouleur de ceinture de sécurité (1 ), et une boucle (61) avec laquelle s'engage de façon amovible la languette (60), dans lequel le dispositif formant ceinture de sécurité (62) permet à l'enrouleur de ceinture de sécurité (1) d'empêcher le retrait de la ceinture de sécurité (3) dans l'état d'urgence afin de retenir un occupant.
